# EUROPEAN PATENT SPECIFICATION

(11) **EP 1 487 670 B1**
(45) Date of publication and mention of the grant of the patent: **02.05.2007**
(21) Application number: 03711668.8
(22) Date of filing: 24.03.2003
(51) Int. Cl.: B60R 16/02, G06F 1/08, G06F 13/38

(54) **SYNCHRONOUS COMMUNICATION INTERFACE SHARING FOR COMMUNICATING WITH A PLURALITY OF DEVICES**
TEILEN EINER SYNCHRONEN KOMMUNIKATIONSSCHNITTSTELLE ZUM KOMMUNIZIEREN MIT MEHREREN VORRICHTUNGEN
PARTAGE D'UNE INTERFACE DE COMMUNICATION SYNCHRONE POUR COMMUNIQUER AVEC PLUSIEURS DISPOSITIFS

(30) Priority: 22.03.2002 US 367022 P
(43) Date of publication of application: 22.12.2004
(73) Proprietor: Siemens VDO Automotive Corporation, Auburn Hills, Michigan 48326 (US)
(72) Inventor: STIERLE, Thomas, Auburn Hills, MI 48326 (US)
(74) Representative: Hazzard, Alan David
(86) International application number: PCT/US2003/008812
(87) International publication number: WO 2003/084112

(56) References cited:
- WO-A-97/25224
- US-A- 5 657 482
- US-A- 5 832 397
- US-A- 5 954 775
- US-A- 6 067 302
- US-B1- 6 253 268
- US-B1- 6 295 494

## Description

### Field of the Invention

This invention generally relates to communication between devices using a synchronous communication interface. More particularly, this invention relates to sharing a synchronous communication interface for communicating with more than one device.

### Description of the Related Art

There are a variety of electronic components supported on modem day vehicles. Communication with these devices is required to gather information from the device and to provide instructions to the device for operation, for example. As the number of devices increases, designers of systems facilitating communication with these devices and staying within the budgetary constraints placed upon vehicle suppliers face various challenges and difficulties.

For example, there are many satellite or peripheral electronic devices supported on a typical modem day vehicle. Such devices include crash sensors, controllers for operating vehicle accessories and controllers associated with supplemental restraint devices, such as airbags. In many instances there are low cost controllers associated with each of the peripheral devices that communicate with a central controller supported on the vehicle. The low cost controllers fit within automotive supplier budgetary constraints but place limitations on the available communication strategies for operating the peripheral devices or gathering information from them.

US 6,296,494 discloses a data transmission system for a vehicle-occupant restraint system in which data of different priority and time-related urgency is realized in four channels using four differentiation criteria, namely two signal levels and two bit rates.

A comparator circuit is used to separate data into two streams, one having a first signal level and the other having a second signal level. Each of these two streams is then further separated into high and low bit rate streams using frequency dividing networks.

When a single, low cost controller is dedicated to communicating with a single device, a conventional synchronous serial interface facilitates such communication, especially where signaling techniques such as Manchester encoding are desired. When there is more than one device potentially associated with a single low cost controller, the difficulty is how to accommodate such communication without introducing additional electronics such as another controller or a multiplexer to facilitate communication with the multiple devices.

This invention addresses that need by providing a unique approach to using a synchronous communication interface on a single low cost controller so that effective communication with more than one device is possible.

According to the invention, a system for communicating with a plurality of external devices comprises the features set out in claim 1 appended hereto.

By altering the speed of the clock associated with the synchronous communication interface, the controller is able to effectively utilize an additional communication port so that two-way communication with at least one device is possible and at least one-way communication is facilitated with another device, even though only a single synchronous communication interface is provided on the controller. Such communication interfaces typically are dedicated to communicating with only one device. With the adjuster module of this invention, a more efficient communication system that facilitates communicating with several devices is realized.

In one example system the controller communicates with a sensor that detects a crash or impact condition on a selected portion of a vehicle. Another device that the controller communicates with is a current modulator that provides a current output that corresponds to a signal transmission to be relayed to a central controller on the vehicle. In this example, the controller synchronous communication interface transmit port is coupled with the current modulator so that the controller is able to send appropriate commands to the current modulator to achieve a desired current level to provide the necessary communication to the main controller unit. The receive port of the synchronous communication interface is associated with the sensor so that the controller receives information from the sensor in a desired manner. In the event that the controller needs to transmit information to the sensor (upon initialization, for example), the controller utilizes the separate communication port and the adjuster module slows down the clock speed to achieve the necessary communication through that port.

The various features and advantages of this invention will become apparent to those skilled in the art from the following detailed description of the currently preferred embodiment. The drawings that accompany the detailed description can be briefly described as follows.

### BRIEF DESCRIPTION OF THE DRAWINGS

Figure 1 schematically illustrates a vehicle having a communication system designed according to this invention.
Figure 2 schematically illustrates one example arrangement of a communication system designed according to this invention.

### DETAILED DESCRIPTION OF THE PREFERRED EMBODIMENTS

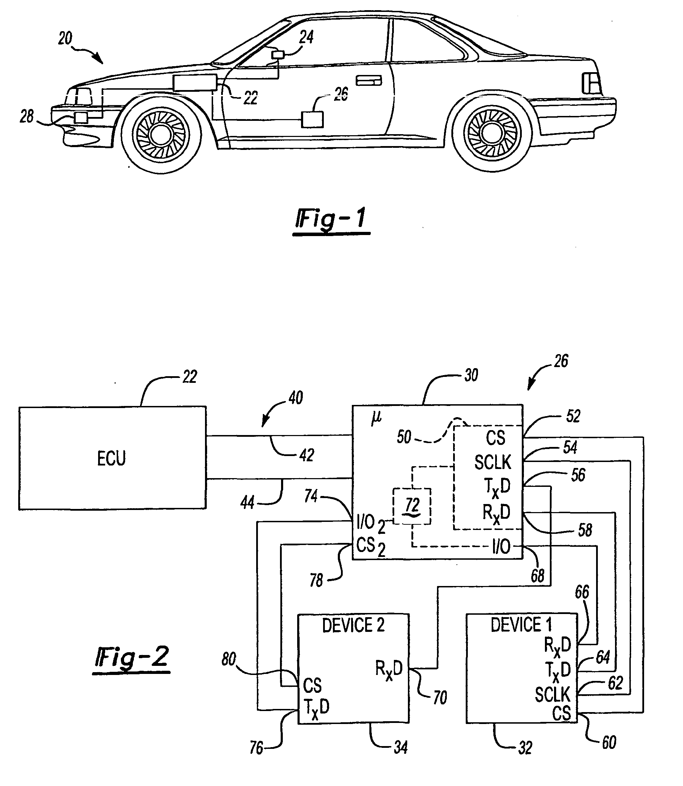

Figure 1 shows a vehicle 20 having a central electronic control unit 22 that communicates with a plurality of peripheral or satellite devices supported on the vehicle. In the example illustration, the satellite devices include a side impact sensor 26, a front crash sensor 28 and an airbag controller module 24. Of course, a variety of such devices may be on a vehicle and this invention is not limited to those particularly named and shown in Figure 1.

Figure 2 schematically illustrates, in somewhat more detail, the sensor arrangement 26. In this example, the sensor arrangement 26 includes a low cost controller 30 that communicates with a first device 32 and a second device 34. In this example, the first device 32 is a pressure sensor that provides information indicative of side impacts at the vehicle door. In this example the second device 34 is a current modulator that generates current at levels corresponding to communication signals that are transmitted to the central control unit 22 to achieve effective communication between the central control unit 22 and the sensor arrangement 26.

Communication between the central control unit 22 and the sensor arrangement 26 occurs over a conventional two wire interface 40. In this example, one wire 42 is dedicated to power supply while another wire 44 is dedicated to signal communication. Such two wire interfaces are known.

The controller 30 communicates with the first device 32 and second device 34 using a synchronous communication interface 50, which in one example is a synchronous serial interface. In another example, the communication interface 50 is a synchronous peripheral interface. Such interfaces are generally known and typically include a four wire connection with a single device.

The example communication interface 50 has a chip select portion 52, a synchronous clock portion 54, a single transmit port 56 and a single receive port 58. The operations of such portions of a communication interface are generally known.

In the example arrangement of Figure 2, the clip select portion 52 of the communication interface 50 is coupled with a chip select portion 60 on the first device 32. The synchronous clock 54 is coupled with the synchronous clock portion 62 on the first device 32. The receive port 58 is coupled with a transmit port 64 on the first device 32. Accordingly, information provided by the first device 32 (such as pressure sensor data), is received by the receive port 58 of the communication interface 50.

A receive port 66 on the first device 32 is coupled with an input/output communication port 68 on the controller 30 that is separate from the synchronous communication interface 50. This particular connection is required because the transmit port 56 of the synchronous communication interface 50 is coupled with a receive port 70 of the second device 34.

An adjuster module 72, which in one example comprises software resident on the controller 30, facilitates communication between the controller 30 and the receive port 66 of the first device 32. The adjuster module 72 adjusts a speed of the synchronous clock 54 so that communication through the communication port 68 to the first device 32 becomes possible.

In one example, the adjuster module 72 reduces the speed of the synchronous clock 54 to a lower speed that is useable for communication through the input/output communication port 68. The synchronous clock 54 typically operates in a range between 500 KHz and 4 MHz for normal communication using the synchronous communication interface 50. The software in the controller that facilitates communication through the input/output port 68 is not capable of following such a high speed so the adjuster module slows down the clock speed to facilitate communication between the ports 68 and 66. In one example, the adjuster module slows the clock speed to approximately 9,600 Hz.

Accordingly, the controller 30 is capable of using the synchronous communication interface 50 for normal operating communications with the first device 32 and the second device 34. Under selected conditions, such as upon system initialization, the controller 30 is also capable of communicating with the first device 32 through the communication port 68. Such an arrangement facilitates communication with the first device 32 when the first device is normally transmitting information back to the controller 30 and the second device 34 is normally receiving information from the controller 30. Such an arrangement is useful, for example, when the first device 32 is a sensor and the second device 34 is a current modulator.

In some situations, two-way communication with both of the devices 32 and 34 may be desired. The example of Figure 2 facilitates such communication. Another input/output communication port 74 of the controller 30 is coupled with a transmit portion 76 of the device 34. Another chip select portion 78 is also coupled with a corresponding chip select portion 80 on the device 34. The adjuster module 72 preferably controls the clock speed of the synchronous clock 54 to slow the clock speed down to correspond to an appropriate Baud rate so that communication through the communication port 74 becomes possible. In such situations, the chip select portions of the controller 30 are used to select the appropriate addressee (i.e., the first device 32 or the second device 34).

In one example, the controller 30 uses a conventional bit-bang technique to achieve the necessary communication through the communication ports 68 or 74 when the synchronous clock 54 is operating at the lower speed.

One advantage of the inventive arrangement is that communication with multiple devices using techniques such as Manchester encoding are usable with very low cost controllers that fit within the budgetary constraints placed upon automotive suppliers. No additional electronics, such as a multiplexer or an additional controller (i.e., an additional synchronous interface 50), are required to accommodate effective communication with more than one device using a single controller, having a single synchronous communication interface when the inventive approach is applied.

Given this description, those skilled in the art will be able to develop the software, hardware, firmware or a combination of them, to realize the adjuster module having characteristics necessary to meet the needs of their particular situation. For example, those skilled in the art who have the benefit of this description will be able to write appropriate software code to program their selected controller to perform the clock speed adjustment that meets the needs of their particular application.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A system for communicating with a plurality of peripheral devices (32, 34), comprising:
a controller (30) including
a synchronous communication interface (50) having one transmit port (56), one receive port (58) and a synchronous clock (54) that operates at a first clock speed for communication through the transmit and receive ports and
at least one communication port (68) separate from the synchronous communication interface; and **characterized by**
an adjuster module (72) that adjusts the clock speed to a second, lower speed when the controller communicates with at least one of the devices through the communication port.

2. The system of claim 1, wherein the adjuster module comprises software associated with the controller.

3. The system of claim 1, wherein the controller communicates through the transmit and receive ports when the clock speed is in the range between 500KHz and 4MHz and the adjuster module reduces the clock speed to below 10KHz to facilitate communication over said port separate from said synchronous communication interface.

4. The system of claim 1, wherein the adjuster module adjusts the speed of the clock during an initialization of the controller and at least one of the devices.

5. The system of claim 1, wherein the adjuster module includes a frequency generator that divides the first clock speed.

6. The system of claim 1, wherein the adjuster module uses a bit bang technique.

7. The system of claim 1, wherein the plurality of devices is supported on a vehicle.

8. The system of claim 7, wherein the first device comprises a pressure sensor and the second device comprises a current modulator.

9. A method of communicating with a plurality of devices (32, 34) using a controller (30) having a synchronous communication interface (50) including one transmit port, (56) one receive port (58) and a synchronous clock (54) that operates at a first clock speed for communication through the transmit and receive ports, comprising the steps of:
communicating with at least a first device (32) through the receive port when the clock operates at the first clock speed;
communicating with at least a second device (34) through the transmit port when the clock operates at the first clock speed;
adjusting the clock speed to a second, slower speed; and **characterized by**
communicating through another port (68) separate from the synchronous communication interface with at least the first device when the clock operates at the second speed.

## Patentansprüche

1. System zum Kommunizieren mit mehreren peripheren Vorrichtungen (32, 34), welches Folgendes umfasst:
eine Steuereinheit (30) einschließlich
einer synchronen Kommunikationsschnittstelle (50), welche einen Sende-Port (56), einen Empfangs-Port (58) und einen Synchrontaktgeber-Bestandteil (54), der mit einer ersten Taktfrequenz arbeitet, für die Kommunikation über die Sende- und Empfangs-Ports aufweist, und
mindestens einem Ein-/Ausgangskommunikations-Port (68), der von der synchronen Kommunikationsschnittstelle abgesetzt ist; und **gekennzeichnet durch**
ein Einstellmodul (72), das die Taktfrequenz auf eine zweite, niedrigere Taktfrequenz anpasst, wenn die Steuereinheit über den Ein-/Ausgangskommunikations-Port mit mindestens einer der Vorrichtungen kommuniziert.

2. System gemäß Anspruch 1, wobei das Einstellmodul Software umfasst, die der Steuereinheit zugeordnet ist.

3. System gemäß Anspruch 1, wobei die Steuereinheit über die Sende- und Empfangs-Ports kommuniziert, wenn sich die Taktfrequenz in einem Bereich zwischen 500 KHz und 4 MHz bewegt, und das Einstellmodul die Taktfrequenz auf unter 10 KHz reduziert, um die Kommunikation über den genannten, von der genannten synchronen Kommunikationsschnittstelle abgesetzten Port zu ermöglichen.

4. System gemäß Anspruch 1, wobei das Einstellmodul die Taktfrequenz während einer Initialisierung der Steuereinheit und mindestens einer der Vorrichtungen anpasst.

5. System gemäß Anspruch 1, wobei das Einstellmodul einen Frequenzgenerator enthält, der die erste Taktfrequenz teilt.

6. System gemäß Anspruch 1, wobei das Einstellmodul eine Bit Bang-Technik verwendet.

7. System gemäß Anspruch 1, wobei mehrere Vorrichtungen in einem Fahrzeug unterstützt werden.

8. System gemäß Anspruch 7, wobei die erste Vorrichtung einen Drucksensor und die zweite Vorrichtung einen Strommodulator umfasst.

9. Verfahren zum Kommunizieren mit mehreren Vorrichtungen (32, 34) unter Verwendung einer Steuereinheit (30) mit einer synchronen Kommunikationsschnittstelle (50) einschließlich eines Sende-Ports (56), eines Empfangs-Ports (58) und eines Synchrontaktgeber-Bestandteils (54), der mit einer ersten Taktfrequenz arbeitet, für die Kommunikation über die Sende- und Empfangs-Ports, welches die folgenden Schritte beinhaltet:
Kommunikation mit mindestens einer ersten Vorrichtung (32) über den Empfangs-Port, wenn der Synchrontaktgeber-Bestandteil mit der ersten Taktfrequenz arbeitet;
Kommunikation mit mindestens einer zweiten Vorrichtung (34) über den Sende-Port, wenn der Synchrontaktgeber-Bestandteil mit der ersten Taktfrequenz arbeitet;
Anpassung der Taktfrequenz auf eine zweite, niedrigere Taktfrequenz; **gekennzeichnet durch**
die Kommunikation mit mindestens der ersten Vorrichtung über einen anderen Ein-/Ausgangskommunikations-Port (68), der von der synchronen Kommunikationsschnittstelle abgesetzt ist, wenn der Synchrontaktgeber-Bestandteil mit der zweiten Taktfrequenz arbeitet.

## Revendications

1. Système pour communiquer avec une pluralité de dispositifs périphériques (32, 34) comprenant :
un contrôleur (30) comprenant
une interface de communication synchrone (50) comportant un port d'émission (56), un port de réception (58) et une horloge synchrone (54) qui fonctionne à une première vitesse d'horloge pour communiquer par les ports d'émission et de réception, et
au moins un port de communication (68) distinct de l'interface de communication synchrone, et **caractérisé par**
un module de réglage (72) qui règle la vitesse de l'horloge sur une seconde vitesse, plus basse, lorsque le contrôleur communique avec au moins l'un des dispositifs par le port de communication.

2. Système selon la revendication 1, dans lequel le module de réglage est constitué par un logiciel associé au contrôleur.

3. Système selon la revendication 1, dans lequel le contrôleur communique par les portes d'émission et de réception lorsque la vitesse d'horloge est dans la fourchette comprise entre 500 kHz et 4 MHz et le module de réglage abaisse la vitesse d'horloge en dessous de 10 kHz pour faciliter la communication sur ledit port distinct de ladite interface de communication synchrone.

4. Système selon la revendication 1, dans lequel le module de réglage règle la vitesse de l'horloge durant une initialisation du contrôleur et d'au moins l'un des dispositifs.

5. Système selon la revendication 1, dans lequel le module de réglage comprend un générateur de fréquences qui divise la première vitesse d'horloge.

6. Système selon la revendication 1, dans lequel le module de réglage utilise un procédé de manipulation de configurations binaires.

7. Système selon la revendication 1, dans lequel la pluralité de dispositifs a pour support un véhicule.

8. Système selon la revendication 7, dans lequel le premier dispositif est constitué par un capteur de pression et le second dispositif est constitué par un modulateur de courant.

9. Procédé de communication avec une pluralité de dispositifs (32, 34) au moyen d'un contrôleur (30) comportant une interface de communication synchrone (50) comprenant un port d'émission (56), un port de réception (58) et une horloge synchrone (54) qui fonctionne à une première vitesse d'horloge pour communiquer par les ports d'émission et de réception, comprenant les étapes consistant à :
communiquer avec au moins un premier dispositif (32) par le port de réception lorsque l'horloge fonctionne à la première vitesse d'horloge ;
communiquer avec au moins un second dispositif (34) par le port d'émission lorsque l'horloge fonctionne à la première vitesse d'horloge ;
régler la vitesse de l'horloge sur une seconde vitesse, plus basse, et **caractérisé par** le fait
de communiquer par un autre port (68) distinct de l'interface de communication synchrone avec au moins le premier dispositif lorsque l'horloge fonctionne à la seconde vitesse.
